# EUROPÄISCHE PATENTSCHRIFT

(11) **EP 2 793 366 B1**
(45) Veröffentlichungstag und Bekanntmachung des Hinweises auf die Patenterteilung: **02.03.2016**
(21) Anmeldenummer: 13163940.3
(22) Anmeldetag: 16.04.2013
(51) Int. Cl.: H02K 1/27, H02K 15/03

(54) **Verfahren zum Herstellen eines Einzelsegmentläufers mit Hülsenvorrichtung und entsprechender Läufer**
Method for producing a single segment rotor with a sleeve device and corresponding rotor
Procédé de fabrication d'un rotor à segments individuels doté d'un dispositif à manchon et rotor correspondant

(43) Veröffentlichungstag der Anmeldung: 22.10.2014
(73) Patentinhaber: Siemens Aktiengesellschaft, 80333 München (DE)
(72) Erfinder: Schneider, Helmut, 97688 Bad Kissingen (DE); Volkmuth, Benjamin, 97717 Sulzthal (DE); Vollmer, Rolf, 36129 Gersfeld (DE)

(56) Entgegenhaltungen:
- DE-A1-102010 061 778
- US-A- 4 339 874
- US-A1- 2008 024 018
- US-A1- 2013 088 111

## Beschreibung

Die vorliegende Erfindung betrifft ein Verfahren zum Herstellen eines Einzelsegmentläufers für eine elektrische Maschine durch Bereitstellen einer Welle, Anordnen mehrerer, jeweils voneinander beabstandeter Blechsegmente am Umfang der Welle verteilt und Anordnen je eines Permanentmagneten zwischen jeweils zwei der Blechpaketsegmente. Darüber hinaus betrifft die vorliegende Erfindung einen Einzelsegmentläufer für eine elektrische Maschine mit einer Welle, mehreren am Umfang der Welle verteilt angeordneten, jeweils voneinander beabstandeten Blechpaketsegmenten und Permanentmagneten, die jeweils zwischen zwei der Blechpaketsegmente angeordnet sind.

Die DE 10 2010 061 778 A1 beschreibt eine Verbindungshülse mit ersten und zweiten Formschlussmitteln.

Die US 2013/088111 A1 beschreibt Verbindungsstifte zur Befestigung von Rotorsegmenten an einem Rotorkern.

Die US 4 339 874 A beschreibt eine Nabe, die aus einem nichtmagnetischen Material besteht.

Die US 2008/024018 A1 beschreibt eine Nabe mit angeformten Befestigungsfortsätzen.

Einzelsegmentläufer für Elektromotoren mit Flusskonzentration zeichnen sich dadurch aus, dass der Läufer quasi sternförmig um die Welle mit Permanentmagneten bestückt ist, und der Zwischenraum zwischen den einzelnen Permanentmagneten jeweils durch ein ferromagnetisches Segment gefüllt ist. Ein solches Einzelsegment wird üblicherweise als Blechpaket gefertigt und kann daher als Blechpaketsegment bezeichnet werden. Die einzelnen Blechpaketsegmente sind, wenn möglich, nicht miteinander verbunden.

Der Aufbau und die Fertigung eines Elektromotors mit Magneten in Flusskonzentration bedarf spezieller Techniken: Insbesondere sollte der Aufbau streuungsarm und für eine Serienproduktion geeignet sein. Da ein streuungsarmer Aufbau in der Regel die Verwendung von Blecheinzelsegmenten, d.h. Blechpaketsegmenten, erfordert und so einen erhöhten Fertigungsaufwand mit sich führt, konkurriert ein solcher Aufbau mit einem Serienfertigungsprozess.

Bisherige Ausführungen entsprechender Rotoren sind ein Kompromiss zwischen Rotorsegmenteinzelblechen einerseits und Rotorblechen andererseits, bei denen die Einzelbleche miteinander verbunden sind. Mit kompletten Rotorblechen wird erreicht, dass das Rotorblechpaket mechanisch stabiler und einfacher herstellbar wird, aber ein Teil des Flusses der Magnete kurzgeschlossen wird. Möglich wird dies, z.B. durch stanzpaketierte Läuferpakete, bei denen in definierten Abständen die inneren Unterbrechungsstege erhalten bleiben. Einzelsegmente, wie sie beispielsweise in der nachveröffentlichten europäischen Patentanmeldung EP 1 215 99 17.9 beschrieben sind, bieten den Vorteil, dass es zu keinem Kurzschluss kommt. Allerdings steigt die Bauteilanzahl und somit der Montage- und Fertigungsaufwand.

Darüber hinaus sollte bei einem Einzelsegmentläufer mit Flusskonzentration das Rotorblech durch "amagnetisches" Material (Permeabilitätszahl µᵣ kleiner 5) zwischen jedem Pol getrennt aufgebaut werden. Dies führt zu einer hohen Anzahl von Einzelsegmenten, die zusammengefügt werden müssen. Dabei entstehen Probleme wegen der komplizierten Herstellung der Einzelsegmente und des komplizierten Zusammenfügens der Einzelsegmente. Außerdem muss durch das amagnetische Material eine getrennte Flussführung realisiert werden. Weiterhin ergeben sich Probleme hinsichtlich des Positionierens und Haltens der Magnete sowie der Momentenübertragung.

Die Aufgabe der vorliegenden Erfindung besteht darin, ein Verfahren bereitzustellen, mit dem ein Einzelsegmentläufer für eine elektrische Maschine mit vermindertem Aufwand hergestellt werden kann.

Erfindungsgemäß wird diese Aufgabe gelöst durch ein Verfahren zum Herstellen eines Einzelsegmentläufers für eine elektrische Maschine durch
- Bereitstellen einer Welle,
- Anordnen mehrerer, jeweils voneinander beabstandeter Blechpaketsegmente am Umfang der Welle verteilt und
- Anordnen je eines Permanentmagneten zwischen jeweils zwei der Blechpaketsegmente,
- Befestigen einer Hülsenvorrichtung auf der Welle und
- stoffschlüssiges Verbinden der Hülsenvorrichtung mit den Blechpaketsegmenten, so dass die Blechpaketsegmente auf der Welle gehalten werden.
Die Hülsenvorrichtung besteht aus mehreren Segmenten, wobei die Segmente jeweils einen kreuzförmigen Querschnitt aufweisen.

Darüber hinaus wird erfindungsgemäß bereitgestellt ein Einzelsegmentläufer für eine elektrische Maschine mit
- einer Welle,
- mehreren am Umfang der Welle verteilt angeordneten, jeweils voneinander beabstandeten Blechpaketsegmenten und
- Permanentmagneten, die jeweils zwischen zweien der Blechpaketsegmente angeordnet sind, wobei
- eine Hülsenvorrichtung auf der Welle befestigt ist und
- die Hülsenvorrichtung mit den Blechpaketsegmenten stoffschlüssig verbunden ist, so dass die Blechpaketsegmente auf der Welle gehalten sind.
Die Hülsenvorrichtung besteht aus mehreren Segmenten, wobei die Segmente jeweils einen kreuzförmigen Querschnitt aufweisen.

In vorteilhafter Weise wird also auf der Welle eine Hülsenvorrichtung befestigt, die stoffschlüssig mit den Blechpaketsegmenten verbunden wird. Derartige Montageschritte lassen sich ohne Weiteres automatisieren, sodass der Fertigungsaufwand minimiert werden kann.

Die Hülsenvorrichtung kann je ein sich axial erstreckendes erstes Positionierelement für jedes der Blechpaketsegmente aufweisen, an dem das jeweilige Blechpaketsegment am Außenumfang der Hülsenvorrichtung positioniert wird. Derartige axial verlaufende Positionierelemente erleichtern nicht nur die Positionierung der Blechpaketsegmente auf der Hülsenvorrichtung, sondern sie bilden auch einen Formschluss in Umfangsrichtung wodurch eine erhöhte Momentenübertragung möglich wird.

Das stoffschlüssige Verbinden der Hülsenvorrichtung mit den Blechpaketsegmenten kann durch Kleben erfolgen. Das Kleben hat den Vorteil, dass ein Stoffschluss auch an Stellen möglich wird, die nach dem Zusammenfügen der Einzelkomponenten nicht oder kaum mehr zugänglich sind. Im Gegensatz dazu erfordert das Löten und Schweißen von Komponenten eine gewisse Zugänglichkeit durch die Schweiß- und Lötapparate. Nichtsdestotrotz kann das stoffliche Verbinden auch durch Schweißen oder Löten erfolgen. Diese Verbindungstechniken haben ihre Berechtigung insbesondere wegen der erhöhten Festigkeit der Verbindung, aber auch wegen der Einsatzmöglichkeiten des zu fertigenden Läufers bei höheren Temperaturen. Bei den meisten Klebstoffen auf Kunststoffbasis ist der Temperatureinsatzbereich nach oben unter Umständen sehr begrenzt.

Die Hülsenvorrichtung besteht aus mehreren Segmenten, die mit der Welle stoffschlüssig verbunden werden, wobei auf jedem Segment eines oder mehrere der Blechpaketsegmente durch das stoffschlüssige Verbinden befestigt wird/werden. Dies hat den Vorteil, dass die Blechpaketsegmente mit den Segmenten der Hülsenvorrichtung vorgefertigt werden können. Die stoffschlüssige Verbindung kann wieder beispielsweise durch Kleben, Schweißen oder Löten erfolgen.

Vorzugsweise besitzt jedes der Segmente der Hülsenvorrichtung ein zweites Positionierelement, mit dem das jeweilige Segment am Außenumfang der Welle positioniert wird. Dabei sind am Außenumfang der Welle korrespondierende Strukturen vorzusehen, die mit den zweiten Positionselementen zusammenwirken. Auch hier dienen die zweiten Positionierelemente nicht nur zur Vereinfachung der Positionierung in Umfangsrichtung, sondern auch zur besseren Momentenübertragung, denn sie bilden mit den korrespondierenden Strukturen auf der Welle einen Formschluss in Umfangsrichtung.

Die Hülsenvorrichtung sollte vorzugsweise im Wesentlichen aus einem amagnetischen Material hergestellt sein. Hierdurch lässt sich eine magnetische Isolation zwischen den Blechpaketsegmenten erzielen, die mit ihren Füßen auf der Hülsenvorrichtung befestigt werden.

Die oben geschilderten Verfahrensmerkmale führen bei der Herstellung des Einzelsegmentläufers zu einer entsprechenden Struktur, wodurch eben auch die korrespondierenden strukturellen Merkmale definiert sind.

Die vorliegende Erfindung wird nun anhand der beigefügten Zeichnungen näher erläutert, in denen zeigen:
- FIG 1: eine auf Welle gefügte Hülse;
- FIG 2: Blechpaketsegmente, die an der Hülse von FIG 1 angeordnet sind;
- FIG 3: eine stoffschlüssige Verbindung zwischen der Hülse und den Blechpaketsegmenten;
- FIG 4: in die Anordnung von FIG 3 eingefügte Permanentmagnete;
- FIG 5: der fertiggestellte Einzelsegmentläufer in perspektivischer Ansicht;
- FIG 6: der Einzelsegmentläufer von FIG 5 aus einem um 90° gedrehten Blickwinkel;
- FIG 7: ein vorgefertigtes Blechpaketsegment mit einem Segment einer Hülsenvorrichtung;
- FIG 8: mehrere vorgefertigte Komponenten gemäß FIG 7 am Umfang einer Welle stoffschlüssig mit dieser verbunden;
- FIG 9: in die Anordnung von FIG 8 eingefügte Permanentmagnete und
- FIG 10: den fertig gestellten Einzelsegmentläufer in perspektivischer Ansicht.

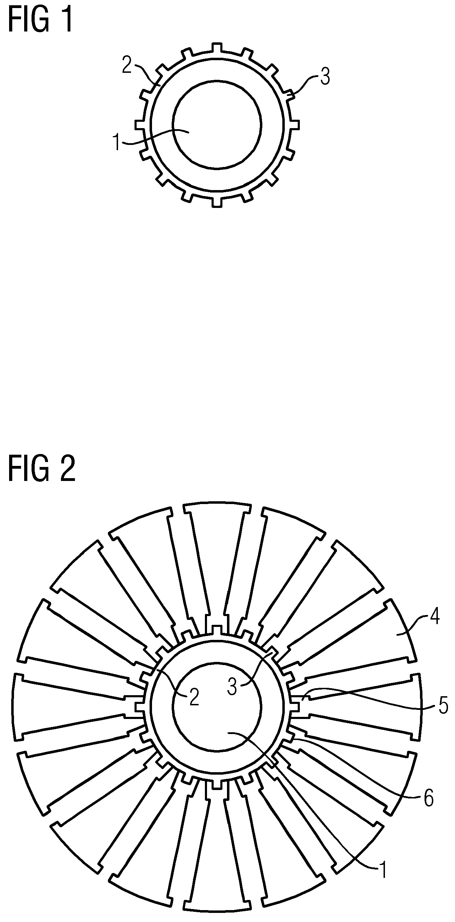

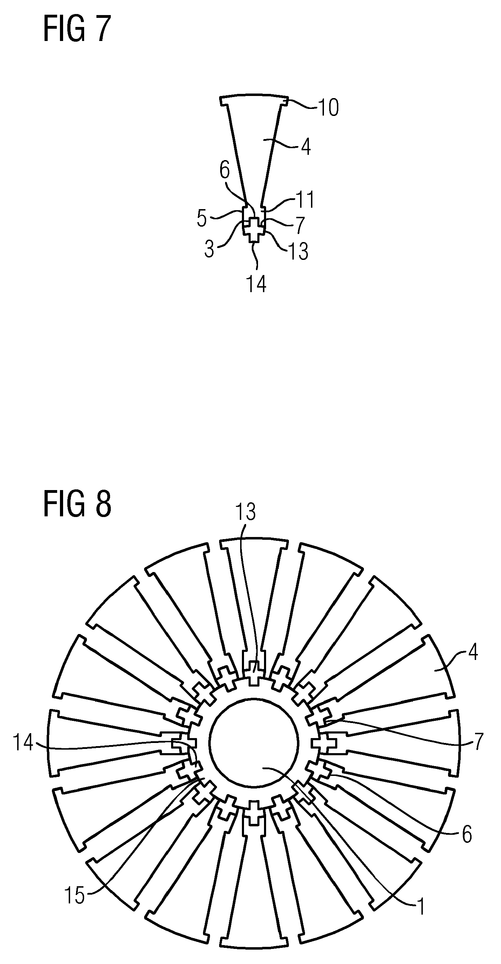

Die in den Zeichnungen FIG 7 bis FIG 10 geschilderten Ausführungsbeispiele stellen bevorzugte Ausführungsformen der vorliegenden Erfindung dar. Im Zusammenhang mit FIG 1 bis FIG 6 wird ein allgemeines Herstellungsverfahren eines Einzelsegmentläufers beispielhaft dargestellt. Dabei zeigt

FIG 1 eine Welle 1 in der Stirnseitenansicht. Die Welle 1 besitzt hier einen kreisrunden Querschnitt. Auf sie ist eine Hülsenvorrichtung, hier kurz Hülse 2, gefügt. Die Hülse 2 besitzt also eine im Querschnitt kreisrunde Innenmantelfläche. An ihrer Außenseite besitzt sie erste Positionierelemente 3, die einteilig an die Hülse 2 angeformt sind. Die Positionierelemente 3 besitzen hier einen rechteckförmigen Querschnitt und erstrecken sich vorzugsweise über die gesamte axiale Länge der Hülse 2. Die Anzahl der Positionierelemente 3 am Außenumfang der Hülse 2 korrespondiert mit der gewünschten Anzahl an Blechpaketsegmenten, die der Einzelsegmentläufer aufweisen soll.

Die Hülse 2 besteht hier aus einem amagnetischen Material, z.B. Aluminium oder Edelstahl. Es ist jedoch nicht zwingend erforderlich, dass die Hülse aus einem solchen amagnetischen Material besteht. Allerdings wird dadurch eine magnetische Isolation der später aufgesetzten Blechpaketsegmente erreicht, was die Leistungsfähigkeit des Einzelsegmentläufers steigert. Alternativ kann auch eine Vollwelle aus amagnetischem Material verwendet werden. In diesem Fall ist die Hülsenvorrichtung einteilig mit der Welle gebildet, wobei das "Befestigen einer Hülsenvorrichtung auf der Welle" hier eben das einteilige Zusammenfügen, z.B. Gießen, von Welle und Hülse bedeutet.

In einem zweiten Herstellungsschritt gemäß FIG 2 werden die Blechpaketsegmente 4 außen an der Hülse 2 von FIG 1 angeordnet. Dabei wird auf jedes erste Positionierelement 3 ein Blechpaketsegment 4 aufgesteckt. Hierfür besitzt jedes Blechpaketsegment 4 einen Fuß 5 mit einer in axialer Richtung verlaufenden Nut 6. Die Nut 6 hat in etwa den gleichen Querschnitt wie das Positionierelement 3. Im vorliegenden Fall besitzt sie also einen rechteckförmigen Querschnitt. Ihre Kontur korrespondiert damit mit derjenigen einer Positionierhilfe 3 bzw. mit derjenigen eines Teils der Hülse 2. Die Po-Positionierungselemente 3 bilden mit den Nuten 6 einen Formschluss in Umfangsrichtung der Hülse 2. Mit ihnen ist also nicht nur die jeweilige Position eines der Blechpaketsegmente 4 in Umfangsrichtung vorgegeben, sondern auch eine verbesserte Drehmomentenübertragung von den Blechpaketsegmenten 4 auf die Hülse 2 möglich gegenüber dem Fall, dass die Hülse 2 keine derartigen Positionierelemente 3 besitzt.

Die Blechpaketsegmente 4 stellen ein Blechpaket aus Einzelblechen dar, die jeweils in axialer Richtung gestapelt sind. Die Herstellung der Blechpaketsegmente 4 kann beispielsweise durch Stanzpaketieren erfolgen.

In dem Beispiel von FIG 2 ist angegeben, dass die Positionierelemente 3 an der Außenseite der Hülse 2 aus dieser herausragen und nach dem Nut-Feder-Prinzip in die jeweiligen Nuten 6 der Blechpaketsegmente 4 eingefügt sind. Analog hierzu kann auch die Hülse 2 als Positionierelemente Nuten aufweisen, in die korrespondierende Federn der Blechpaketsegmente eingesteckt sind.

Auch die Form der Nuten und Federn, d.h. der Positionierelemente, kann variieren. Beispielsweise kann zwischen Hülse 2 und jedem der Blechpaketsegmente 4 jeweils eine Schwalbenschwanzverbindung bestehen, wobei die Einzelblechpakete dann in axialer Richtung auf die Hülse 2 geschoben werden. Dies hätte den Vorteil, dass durch die Schwalbenschwanzverbindung Zentrifugalkräfte der Blechpaketsegmente 4 aufgenommen werden können. Die stoffschlüssige Verbindung zwischen Hülsenvorrichtung und Blechpaketsegmenten würde dann in erster Linie der axialen Befestigung dienen.

Alternativ können die ersten Positionierelemente 3 auch beispielsweise einen dreieckförmigen, halbkreisförmigen oder anderen Querschnitt aufweisen. In diesem Fall muss dann die stoffschlüssige Verbindung wie auch in dem in FIG 2 dargestellten Fall des rechteckförmigen Querschnitts die Zentrifugalkräfte der Blechpaketsegmente 4 aufnehmen.

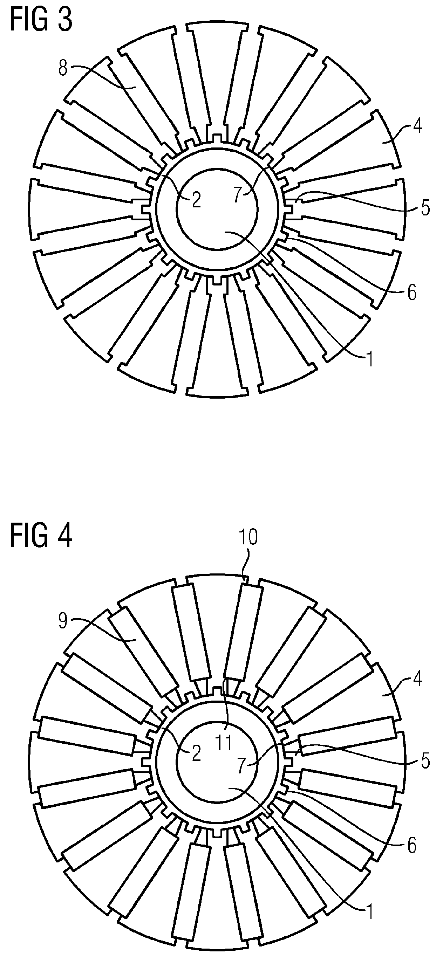

In FIG 3 ist eine stoffschlüssige Verbindung zwischen der Hülse 2 und den Blechpaketsegmenten 4 durch eine Verbindungsschicht 7 symbolisiert. Der Fuß 5 jedes Blechpaketsegments 4 ist damit stoffschlüssig mit der Hülse 2 verbunden. Dieser Stoffschluss kann sich auf die gesamte Unterseite eines jeweiligen Fußes 5 oder (oder einem Teil davon) nur auf dessen Außenrand beziehen. Im letzteren Fall wird nur der Randbereich eines Fußes 5 mit der Hülse 2 stoffschlüssig verbunden, während im erstgenannten Fall die gesamte Unterseite (oder der Teil) des Fußes 5 mit dem jeweiligen Bereich der Hülse 2 stoffschlüssig verbunden wird.

Die stoffschlüssige Verbindung kann beispielsweise durch Kleben, Schweißen oder Löten erfolgen. Im Falle des Klebens wird der Kleber nach dem Fertigungsschritt von FIG 1 vor dem Anordnen der Blechpaketsegmente gemäß FIG 2 auf die Hülse und/ oder die Blechpaketsegmente 4 aufgetragen.

Im Falle des Schweißens der Blechpaketsegmente 4 an die Hülse 2 sind mehrere Varianten möglich. Zum einen kann ein Schweißen in axialer Richtung mit Führung durch die Magnettaschen, die in dem Zwischenraum von jeweils zwei benachbarten Blechpaketsegmenten gebildet sind erfolgen. Alternativ kann auch ein sog. Tiefenscheißen in axialer Richtung (z.B. Elektronenstrahlschweißen, Laserschweißen etc.) erfolgen. Schließlich kann das Schweißen auch durch Reibschweißen erfolgen.

In einem weiteren Schritt werden in die Magnettaschen 8, die zwischen den Blechpaketsegmenten 4 ausgebildet sind (vergleiche FIG 3) Permanentmagnete 9 eingefügt, wie dies in FIG 4 dargestellt ist. Die Permanentmagnete werden durch erste Positionierhilfen 10 am Außenrand der jeweiligen Blechpaketsegmente 4 und durch zweite Positionierhilfen 11 an den Füßen 5 der Blechpaketsegmente 4 in die Magnettaschen 8 axial eingeschoben. Dabei dienen die Positionierhilfen 10 und 11 als Führungen. Gleichzeitig bilden sie mit den Magneten 9 einen Formschluss in radialer Richtung.

Die Zentrifugalkräfte, die auf die Permanentmagnete 9 wirken, werden also von den Positionierhilfen 10 aufgenommen, die in Umfangsrichtung etwas über die Magnete 9 hinausragen. Diese Zentrifugalkräfte werden dann durch die stoffschlüssige Verbindung der Blechpaketsegmente 4 mit der Hülse 2 auf diese übertragen.

Die Positionierhilfen 10 und 11 ragen in Umfangsrichtung nur soweit über den jeweiligen Magneten 9, dass sie ihre Führungsfunktion bzw. Formschlussfunktion erfüllen können. Es verbleibt jedoch ein Spalt zwischen jeweils benachbarten Blechpaketsegmenten, der nur z.T. durch die jeweiligen Permanentmagnete 9 gefüllt ist. Über die amagnetische Hülse 2 sind die einzelnen Blechpaketsegmente zwar mechanisch miteinander verbunden, aber gegenüber einander magnetisch isoliert.

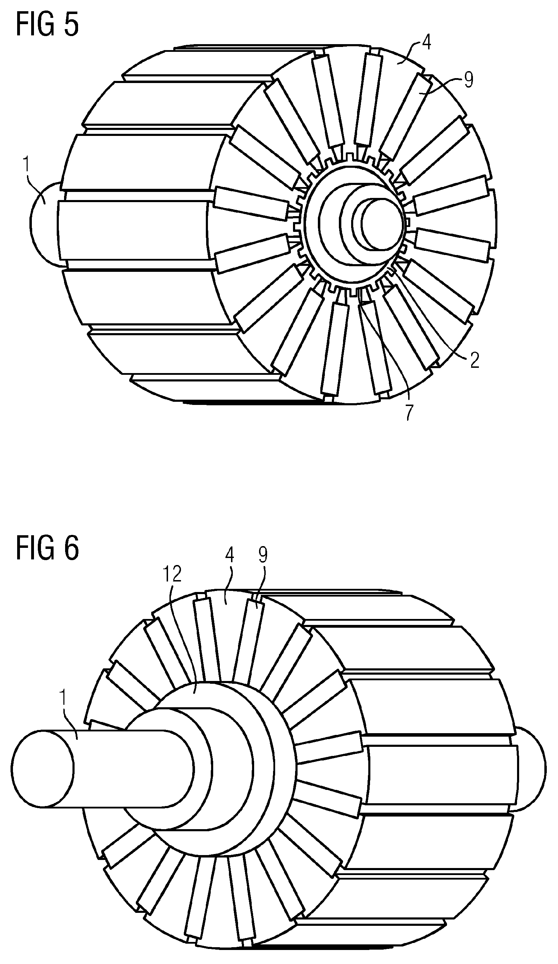

FIG 5 zeigt den im Wesentlichen fertiggestellten Einzelsegmentläufer in perspektivischer Ansicht. Seine Draufsicht entspricht der Ansicht von FIG 4. Die Verbindungsschicht 7 deutet die radiale Fixierung der Blechpaketsegmente 4 auf der Hülse 2 durch stoffschlüssige Verbindung an.

FIG 6 zeigt den Einzelsegmentläufer von FIG 5 in einer um 90° gedrehten Darstellung. In dieser Perspektive ist die Rückseite der Welle zu erkennen, die hier mit einem Kragen 12 ausgestattet ist. Dieser dient zur axialen Fixierung der Blechpaketsegmente 4 auf der Welle 1. Abschließend kann der Läufer mit Harz getränkt werden, wodurch eine weitere Fixierung erfolgt.

Anhand der FIG 7 bis 10 wird nun ein Ausführungsbeispiel für das erfindungsgemäße Herstellungsverfahren dargestellt.

In einem ersten Fertigungsschritt wird gemäß FIG 7 ein Blechpaketsegment 4 mit einem Hüllensegment 13 verbunden. Das Blechpaketsegment 4 hat hier die identische Struktur wie in dem vorhergehenden Beispiel (vergleiche FIG 2 und 4). D.h. es besitzt an seiner Außenseite eine erste Positionierhilfe 10, einen im gefertigten Zustand zur Welle ausgerichteten Fuß 5 und daran eine zweite Positionierhilfe 11. Weiterhin besitzt das Blechpaketsegment 4 eine im Querschnitt rechteckförmige Nut 6 mit der er auf einem Positionierelement 3 gleichen Querschnitts des Hülsensegments 13 sitzt. Das Hülsensegment 13 besitzt hier einen kreuzförmigen Querschnitt, wobei dem ersten Positionierelement 3 ein zweites Positionierelement 14 gegenüber steht. Das zweite Positionierelement 14 hat hier ebenfalls einen rechteckförmigen Querschnitt und dient zur Positionierung des Hülsensegments 13 auf der Welle 1. Wie in dem vorhergehenden Beispiel können auch hier die Querschnitte der Positionierungselemente 3 und 14 von dem rechteckigen Querschnitt verschieden sein. Es wird hierzu auf die genannten Beispiele verwiesen.

Das Hülsensegment 13 besteht vorzugsweise aus einem amagnetischen Material. Insbesondere kann es wie die Hülse 2 aus dem vorhergehenden Beispiel aus einem aus tentitischem Edelstahl, aus Aluminium, aus Messing oder dergleichen bestehen.

Die Verbindungsschicht deutet wiederum den Stoffschluss zwischen dem Blechpaketsegment 4 und dem Hülsensegment 13 an. Der Stoffschluss kann an der gesamten Unterseite des Fußes 5 oder nur an Teilen davon erfolgen. Außerdem kann er nur oder zusätzlich an den Seiten des Fußes 5 erfolgen, die gegebenenfalls mit den Seiten des Hülsensegments 13 bündig sind.

Der Stoffschluss zwischen dem Blechpaketsegment 4 und dem Hülsensegment 13 kann wie bei dem vorhergehenden Beispiel durch Kleben, Schweißen und Löten, etc. erfolgen. Der Klebstoff kann auf die Unterseite des Fußes 5 des Blechpaketsegments 4 und/oder auf die Oberseite des Hülsensegments 13 aufgetragen werden. Das Schweißen kann durch konventionelles Schweißen, Tiefenschweißen oder Reibschweißen erfolgen.

Die vorgefertigten Blechpaketsegment-Hülsensegment-Paare werden nun auf der Welle 1 befestigt. Hierzu besitzt die Welle 1 Konturen 15, die mit den zweiten Positionierelementen 14 korrespondieren und einen Formschluss in Umfangsrichtung bilden. Im vorliegenden Beispiel zeichnen sich die Konturen 15 durch Nuten aus, in die die rippenförmigen zweiten Positionierelemente 14 eingesetzt sind. Die Querschnitte der zweiten Positionierelemente 14 können ebenso variieren wie diejenigen der ersten Positionierelemente 3 im vorhergehenden Beispiel. Das gleiche gilt für die ersten Positionierelemente 3 im vorliegenden Ausführungsbeispiel.

Wie aus FIG 8 zu erkennen ist, bilden die Hülsensegmente 13, die sich in axialer Richtung zumindest teilweise soweit erstrecken wie die Blechpaketsegmente 4, zusammen ein hülsenförmiges Gebilde, das hier als Hülsenvorrichtung bezeichnet wird. Die Segmente 13 können dabei aneinander grenzen, müssen es aber nicht.

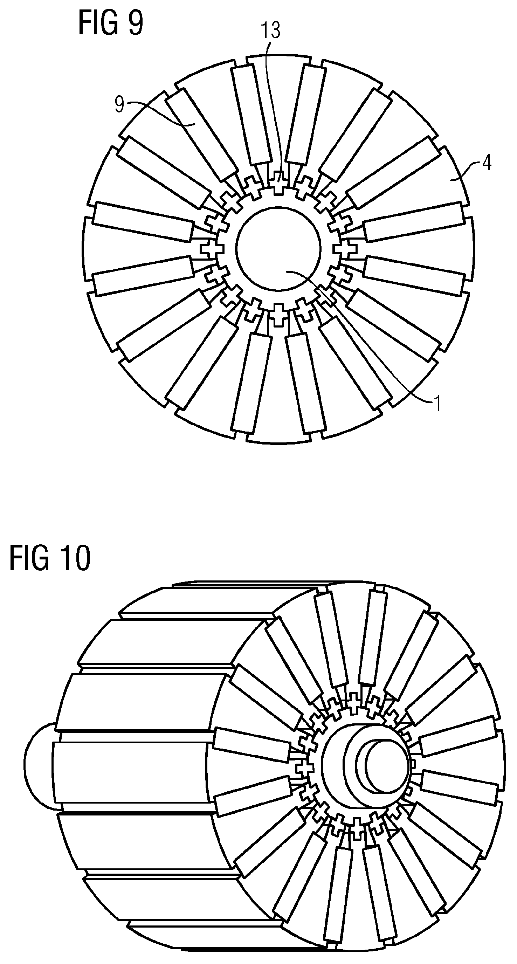

Die Hülsensegmente 13 werden hier wiederum durch Stoffschluss an der Welle 1 befestigt. Dies erfolgt mit den oben beschriebenen Techniken durch Kleben, Schweißen, Löten etc. Abgesehen von der Hülsenvorrichtung ist der übrige Aufbau der Anordnung nun identisch mit demjenigen von FIG 3. Zwischen den quasi sternförmig angeordneten Blechpaketsegmenten 4 ergeben sich die Magnettaschen 8, in die im nächsten Verfahrensschnitt gemäß FIG 9 Permanentmagnete 9 eingesetzt werden. In perspektivischer Ansicht ergibt sich daraus der in FIG 10 dargestellte Einzelsegmentläufer. Hinsichtlich der weiteren Details kann auf die Figuren 3 bis 6 einschließlich der dazugehörigen Beschreibung verwiesen werden.

Am Ende des Fertigungsverfahrens kann der in den Figuren 5, 6 und 10 dargestellte Einzelsegmentläufer mit einem Tränkharz getränkt werden. Sobald das Tränkharz ausgehärtet ist sind dann die Permanentmagnete 9 stabil in den Einzelsegmentläufer eingebunden. Auch die Blechpaketsegmente 4 werden hierdurch stabilisiert.

Der Aufbau der Welle mit einer Hülse bzw. Hülsensegmenten hat den Vorteil, dass für die Welle im Wesentlichen bekannte Serienwerkstoffe verwendet werden können. Nur ein geringer Teil für die Hülse bzw. die Hülsensegmente, d.h. die Hülsenvorrichtung, muss aus einem teureren bzw. weniger bekannten Material (Edelstahl) gefertigt werden. Ein weiterer Vorteil des Einzelsegmentläufers liegt eben in den einzelnen Blechpaketsegmenten, mit denen ein streuungsarmer Aufbau erreicht werden kann. Außerdem erleichtern die Positionierungs- und Fügekonturen die Montage, vergrößern die Fläche zum stoffschlüssigen Verbinden der Einzelteile und ermöglichen einen geringen Luftspalt. Des Weiteren sind die stoffschlüssigen Verbindungen sehr gut automatisierbar und eignen sich für eine Serienproduktion. Durch das Tränken lassen sich ferner etwaige Luftspalte zwischen den Permanentmagneten und dem Blechpaket ausfüllen. Diese könnten andernfalls zu Bewegungen des Magneten führen, die diesen beschädigen/zerstören könnten.

## Patentansprüche

1. Verfahren zum Herstellen eines Einzelsegmentläufers für eine elektrische Maschine durch
- Bereitstellen einer Welle (1),
- Anordnen mehrerer, jeweils voneinander beabstandeter Blechpaketsegmente (4) am Umfang der Welle verteilt und
- Anordnen je eines Permanentmagneten (9) zwischen jeweils zwei der Blechpaketsegmente,
- Befestigen einer Hülsenvorrichtung (2) auf der Welle (1) und
- stoffschlüssiges Verbinden der Hülsenvorrichtung (2) mit den Blechpaketsegmenten (4), so dass die Blechpaketsegmente auf der Welle gehalten werden,
**dadurch gekennzeichnet, dass**
die Hülsenvorrichtung (2) aus mehreren Segmenten (13) besteht, wobei die Segmente (13) jeweils einen kreuzförmigen Querschnitt aufweisen.

2. Verfahren nach Anspruch 1, wobei die Hülsenvorrichtung (2) je ein sich axial erstreckendes erstes Positionierelement (3) für jedes der Blechpaketsegmente (4) aufweist, an dem das jeweilige Blechpaketsegment (4) am Außenumfang der Hülsenvorrichtung (2) positioniert wird.

3. Verfahren nach einem der vorhergehenden Ansprüche, wobei das stoffschlüssige Verbinden durch Kleben erfolgt.

4. Verfahren nach einem der Ansprüche 1 oder 2, wobei das stoffschlüssige Verbinden durch Schweißen oder Löten erfolgt.

5. Verfahren nach einem der Ansprüche 1 bis 4, wobei die Hülsenvorrichtung (2) aus mehreren Segmenten (13) besteht, die mit der Welle (1) stoffschlüssig verbunden werden, und auf jedem Segment (13) eines oder mehrerer der Blechpaketsegmente (4) durch das stoffschlüssige Verbinden befestigt wird/werden.

6. Verfahren nach Anspruch 5 , wobei jedes der Segmente (13) ein zweites Positionierelement (14) aufweist, mit dem das jeweilige Segment am Außenumfang der Welle (1) positioniert wird.

7. Einzelsegmentläufer für eine elektrische Maschine mit
- einer Welle (1),
- mehreren am Umfang der Welle (1) verteilt angeordneten, jeweils voneinander beabstandeten Blechpaketsegmenten (4) und
- Permanentmagneten (9), die jeweils zwischen zwei der Blechpaketsegmente (4) angeordnet sind,
- eine Hülsenvorrichtung (2), die auf der Welle befestigt ist, wobei die Hülsenvorrichtung (2) mit den Blechpaketsegmenten (4) stoffschlüssig verbunden ist, so dass die Blechpaketsegmente (4) auf der Welle (1) gehalten sind,
**dadurch gekennzeichnet, dass**
die Hülsenvorrichtung (2) aus mehreren Segmenten (13) besteht, wobei die Segmente (13) jeweils einen kreuzförmigen Querschnitt aufweisen.

8. Einzelsegmentläufer nach Anspruch 7 , wobei die Hülsenvorrichtung (2) im Wesentlichen aus einem amagnetischen Material hergestellt ist.

9. Einzelsegmentläufer nach Anspruch 7 oder 8, wobei die Hülsenvorrichtung (2) aus mehreren Segmenten (13) besteht, die mit der Welle (1) stoffschlüssig verbunden sind.

## Claims

1. Method for producing a single segment rotor for an electric machine by
- providing a shaft (1),
- arranging a number of laminated core segments (4) at a distance from one another in each case over the periphery of the shaft and
- arranging a permanent magnet (9) between each two of the laminated core segments in each case,
- fastening a sleeve device (2) to the shaft (1) and
- connecting the sleeve device (2) to the laminated core segments (4) in a material-bonded manner so that the laminated core segments are held on the shaft,
**characterised in that**
the sleeve device (2) consists of a number of segments (13), wherein the segments (13) each have a cross-shaped cross-section.

2. Method according to claim 1, wherein the sleeve device (2) has an axially-extending first positioning element (3) for each of the laminated core segments (4) in each case, on which the respective laminated core segment (4) is positioned on the outer periphery of the sleeve device (2).

3. Method according to one of the preceding claims, wherein the material-bonded connection is performed by means of adhesive.

4. Method according to one of claims 1 or 2, wherein the material-bonded connection is performed by means of welding or soldering.

5. Method according to one of claims 1 to 4, wherein the sleeve device (2) consists of a number of segments (13), which are connected to the shaft (1) in a material-bonded manner, and is/are fastened to each segment (13) of one or a number of the laminated core segments (4) by means of the material-bonded connection.

6. Method according to claim 5, wherein each of the segments (13) has a second positioning element (14), with which the respective segment is positioned on the outer periphery of the shaft (1).

7. Single segment rotor for an electric machine having
- a shaft (1),
- a number of laminated core segments (4) arranged at a distance from one another in each case and distributed over the periphery of the shaft (1) and
- permanent magnets (9), which are arranged between two of the laminated core segments (4) in each case,
- a sleeve device (2), which is fastened to the shaft, wherein the sleeve device (2) is connected to the laminated core segments (4) in a material-bonded manner, so that the laminated core segments (4) are held on the shaft (1),
**characterised in that**
the sleeve device (2) consists of a number of segments (13), wherein the segments (13) each have a cross-shaped cross-section.

8. Single segment rotor according to claim 7, wherein the sleeve device (2) is produced substantially from a non-magnetic material.

9. Single segment rotor according to claim 7 or 8, wherein the sleeve device (2) consists of a number of segments (13) which are connected to the shaft (1) in a material-bonded manner.

## Revendications

1. Procédé de fabrication d'un rotor à segments individuels pour une machine électrique en
- se procurant un arbre ( 1 )
- répartissant sur le pourtour de l'arbre plusieurs segments ( 4 ) de paquet de tôles à distance les uns des autres et
- mettant respectivement un aimant ( 9 ) permanent entre respectivement deux des segments de paquet de tôles,
- fixant un dispositif ( 2 ) à manchon sur l'arbre ( 1 ) et
- liant à coopération de matière le dispositif ( 2 ) à manchon au segment ( 4 ) de paquet de tôles, de manière à retenir les segments de paquet de tôles sur l'arbre,
**caractérisé en ce que**
le dispositif ( 2 ) à manchon est constitué de plusieurs segments ( 13 ), les segments ( 13 ) ayant respectivement une section transversale cruciforme.

2. Procédé suivant la revendication 1, dans lequel le dispositif ( 2 ) à manchon a respectivement, pour chacun des segments ( 4 ) de paquet de tôles, un premier élément ( 3 ) de mise en position qui s'étend axialement et sur lequel le segment ( 4 ) de paquet de tôles respectif peut être mis en place sur le pourtour extérieur du dispositif ( 2 ) à manchon.

3. Procédé suivant l'une des revendications précédentes, dans lequel la liaison à coopération de matière s'effectue par collage.

4. Procédé suivant l'une des revendications 1 ou 2, dans lequel la liaison à coopération de matière s'effectue par soudage ou par brasage.

5. Procédé suivant l'une des revendications 1 ou 4, dans lequel le dispositif ( 2 ) à manchon est constitué de plusieurs segments ( 13 ) qui sont reliés à coopération de matière avec l'arbre ( 1 ) et sur chaque segment ( 13 ) est ou sont fixés un ou plusieurs des segments ( 4 ) de paquet de tôles par la liaison à coopération de matière.

6. Procédé suivant la revendication 5, dans lequel chacun des segments ( 13 )
a un deuxième élément ( 14 ) de mise en position, par lequel le segment respectif est mis en position sur le pourtour extérieur de l'arbre ( 1 ).

7. Rotor à segments individuels pour une machine électrique comprenant
- un arbre ( 1 ),
- plusieurs segments ( 4 ) de paquet de tôles répartis sur le pourtour de l'arbre ( 1 ) et respectivement à distance les uns des autres et
- des aimants ( 9 ) permanents qui sont mis respectivement entre deux des segments ( 4 ) de paquet de tôles,
- un dispositif ( 2 ) à manchon qui est fixé sur l'arbre, le dispositif ( 2 ) à manchon étant relié à coopération de matière au segment ( 4 ) de paquet de tôles de manière à retenir les segments ( 4 ) de paquet de tôles sur l'arbre ( 1 ),
**caractérisé en ce que**
le dispositif ( 2 ) à manchon est constitué de plusieurs segments ( 13 ), les segments ( 13 ) ayant respectivement une section transversale cruciforme.

8. Rotor à segments individuels suivant la revendication 7, dans lequel le dispositif ( 2 ) à manchon est essentiellement en un matériau amagnétique.

9. Rotor à segments individuels suivant la revendication 7 ou 8, dans lequel le dispositif ( 2 ) à manchon est constitué de plusieurs segments ( 13 ) qui sont reliés à coopération de matière à l'arbre ( 1 ).
